# EUROPÄISCHE PATENTANMELDUNG

(11) **EP 0 766 477 A2**
(43) Veröffentlichungstag der Anmeldung: **02.04.1997**
(21) Anmeldenummer: 96440074.1
(22) Anmeldetag: 27.09.1996
(51) Int. Cl.: H04N 7/173

(54) **Übertragungssystem mit Übergabeeinrichtungen, die Auswirkungen von Störungen reduzieren**

(30) Priorität: 30.09.1995 DE 19536682
(71) Anmelder: ALCATEL ALSTHOM COMPAGNIE GENERALE D'ELECTRICITE, 75008 Paris (FR)
(72) Erfinder: Krimmel, Heinz, 70825 Korntal-Münchingen (DE)
(74) Vertreter: Hellebrandt, Martin, Dipl.-Ing.

(57) **Zusammenfassung**

Es ist ein Übertragungssystem mit einer Vielzahl von Übergabeeinrichtungen (1) angegeben, die an ein Verteilnetz (9) angeschlossen sind. An jede in einem Haus (10) vorhandene Übergabeeinrichtung (1) sind durch ein privates hausinternes Netz (13) Teilnehmerendeinrichtungen (11) anschließbar, die Aufwärtssignale (AUF) zu einer Zentrale (8) senden können.

Eine Übergabeeinrichtung (1) hat erste Mittel (4, 5, 6), die ein einem zweiten Anschluß (3) zugeführtes Aufwärtssignal (AUF) mit einem festgelegten Dämpfungsfaktor (a) dämpfen und einem ersten Anschluß (2) zuführen. Das Aufwärtssignal (AUF) wird von einer Teilnehmerendeinrichtung (11) mit einem Signalpegel ausgesendet, der so gewählt ist, daß das Aufwärtssignal (AUF) nach der Dämpfung einen im Verteilnetz (9) festgelegten Pegel hat.

## Beschreibung

Die Erfindung betrifft ein Übertragungssystem gemäß dem Oberbegriff des Anspruchs 1. Außerdem betrifft die Erfindung eine Übergabeeinrichtung für ein solches Übertragungssystem und eine Einrichtung zum richtungsabhängigen Dämpfen von Signalen. Die Übergabeeinrichtung ist Gegenstand des Anspruchs 7 und die Einrichtung zum richtungsabhängigen Dämpfen von Signalen ist Gegenstand des Anspruchs 8.

Ein Übertragungssystem ist z. B. ein Breitbandverteilnetz, das aus H. Hessenmüller et al, "Zugangsnetzstrukturen für interaktive Videodienste", Teil 1, Der Fernmeldeingenieur, 48. Jahrgang, August 1994, bekannt ist. Darin sind in einer Übersicht Breitbandverteilnetze beschrieben, die auch als BK-Netze bezeichnet werden. In einer übergeordneten BK-Verstärkerstelle werden alle Fernseh- und Rundfunkprogramme zu einem einheitlichen Programmangebot zusammengefaßt und an die benutzerseitigen BK-Verstärkerstellen verteilt, die sich üblicherweise in Ortsvermittlungsstellen befinden. Von den BK-Verstärkerstellen aus, werden die Fernseh- und Rundfunkprogramme in Abwärtsrichtung zu den Teilnehmern verteilt.

Ein solches BK-Netz stellt ein öffentliches Netz dar, das an Übergabeeinrichtungen endet, die auch als Hausübergabepunkte bezeichnet werden. An jede Übergabeeinrichtung, die sich üblicherweise in einem Haus befindet, können über ein privates hausinternes Netz ein oder mehrere Teilnehmerendgeräte angeschlossen werden.

Um in einem BK-Netz neben den unidirektionalen Diensten in Abwärtsrichtung (Fernseh- und Rundfunksignale) auch die Möglichkeit für interaktive Dienste, d. h. sogenannte Service-on-Demand (SoD) Dienste wie z. B. Video-on-Demand (VoD), zu schaffen, sind in einem BK-Netz Rückkanäle für eine Signalübertragung in Aufwärtsrichtung vorgesehen. Dadurch können Teilnehmer der SoD-Vermittlungsstelle Nutzdaten senden, um z. B. Information anzufordern. Die Teilnehmerendgeräte haben dafür Zusatzeinrichtungen für interaktive Dienste, solche Zusatzeinrichtungen werden auch als Set-Top Boxen bezeichnet.

Bei derzeitigen BK-Netzen ist für die Rückkanäle (Aufwärtssignale) ein Frequenzbereich von ca. 5 - 30 MHz und für die Fernseh- und Rundfunksignale (Abwärtssignale) ein Frequenzbereich von ca. 40 - 300 MHz (450 MHz, Hyperband) festgelegt.

Das private hausinterne Netz ist zahlreichen Störungen ausgesetzt, die z. B. von Kurzwellenrundfunksendern, Amateurfunkgeräten und elektrischen Maschinen verursacht werden. Hinzukommt, daß die Kabel des hausinternen Netzes zum Teil ungeachtet solcher Störquellen ausgeführt sind. Durch die Störungen werden besonders die Aufwärtssignale gestört. Diese Problematik ist bekannt, z. B. aus N. De Muynck et al, "CATV-cables, they can do more!", International Television Symposium, Montreux, Schweiz, 15. Juni 1991, Seiten 179 bis 195. Durch eine Kombination von Hoch- und Tiefpaßfiltern wird dort verhindert, daß Aufwärtssignale mit einem hohen Signalpegel die Abwärtssignale stören. Dadurch soll auch verhindert werden, daß die im hausinternen Netz, also innerhalb des Hauses den Aufwärtssignalen überlagerten Störungen die Übertragung beeinflussen oder sogar unterbrechen.

Der Erfindung liegt die Aufgabe zugrunde, ein Übertragungssystem anzugeben, bei dem Aufwärtssignale von einer Zentrale empfangen und ausgewertet werden können, obwohl den Aufwärtssignalen in privaten hausinternen Netzen Störungen überlagert wurden. Ein die Aufgabe lösendes Übertragungssystem ist Gegenstand des Anspruchs 1. Eine Übergabeeinrichtung für ein solches Übertragungssystem ist Gegenstand des Anspruchs 7 und eine Einrichtung zum richtungsabhängigen Dämpfen von Signalen ist Gegenstand des Anspruchs 8. Vorteilhafte Ausgestaltungen der Erfindung sind in den Unteransprüchen angegeben.

Ein Vorteil der Erfindung ist, daß die Übergabeeinrichtung eine passive Einrichtung ist, so daß am Ort der Übergabeeinrichtung keine Spannungsversorgung notwendig ist. Außerdem ist es von Vorteil, daß die Übergabeeinrichtung ohne großen Aufwand an örtliche Gegebenheiten, z. B. an den Betrag des lokalen Störpegels, angepaßt werden kann.

Die Erfindung wird im folgenden beispielhaft anhand von Zeichnungen erklärt. Es zeigen:
- Fig. 1: ein Prinzipschaltbild einer Einrichtung zum richtungsabhängigen Dämpfen von Signalen,
- Fig. 2: ein Blockschaltbild der in Fig. 1 gezeigten Einrichtung zum richtungsabhängigen Dämpfen von Signalen,
- Fig. 3: ein übertragungssystem mit einer in einem Haus vorhandenen Übergabeeinrichtung, und
- Fig. 4: drei Diagramme, in denen mittlere Signal- und Störpegel als Funktion der Zeit gezeigt sind.

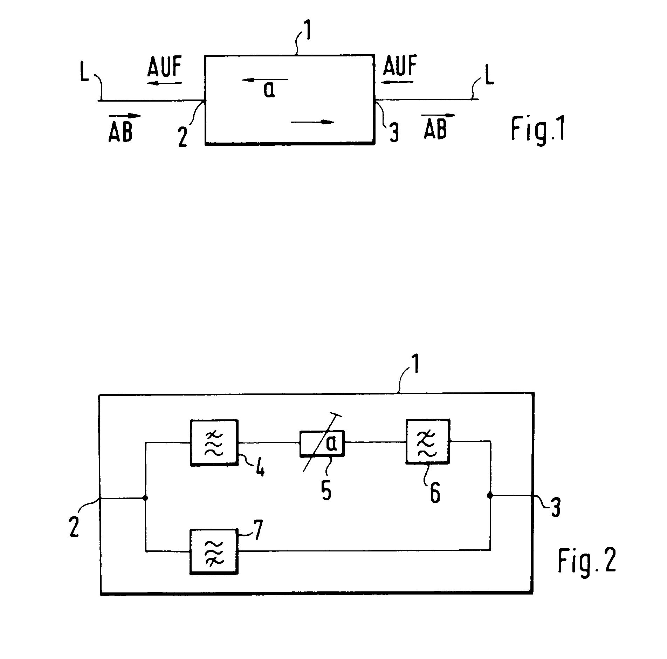

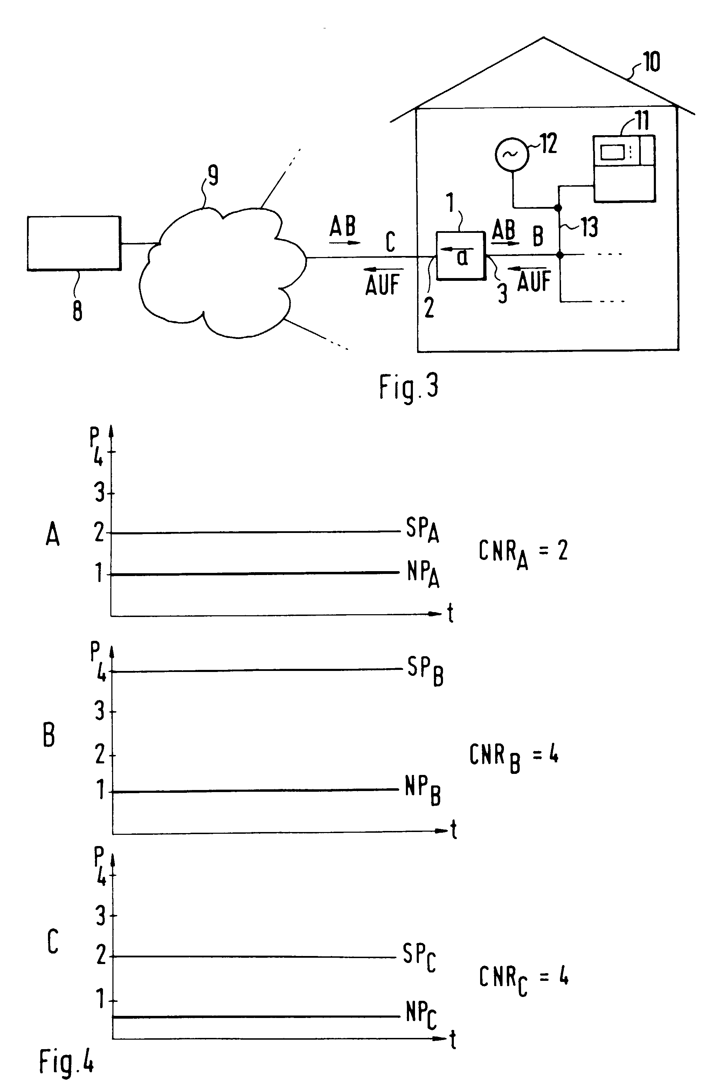

In Fig. 1 ist ein Prinzipschaltbild einer Einrichtung 1 zum richtungsabhängigen Dämpfen von Signalen gezeigt, um die Grundidee der Erfindung zu erläutern. Im Anschluß daran wird eine Verwendung einer solchen Einrichtung 1 zum richtungsabhängigen Dämpfen von Signalen in einem Übertragungssystem erläutert. Die Einrichtung 1 hat zwei Anschlüsse 2, 3, durch die die Einrichtung 1 in einen Leitungsabschnitt L eingefügt werden kann. Bei einem noch zu erläuternden Übertragungssystem gemäß Fig. 3 ist der Leitungsabschnitt L eine Übertragungsstrecke, vorzugsweise wird dafür ein Koaxialkabel verwendet.

Dem Anschluß 2 kann ein Signal zugeführt werden, das für die folgende Beschreibung als Abwärtssignal AB bezeichnet wird. Auch dem Anschluß 3 kann ein Signal zugeführt werden, das im folgenden als Aufwärtssignal AUF bezeichnet wird. Gemäß der Grundidee der Erfindung wird das Abwärtssignal AB möglichst ungedämpft dem Anschluß 3 zugeführt, und das Aufwärtssignal AUF wird mit einem festgelegten Dämpfungsfaktor a gedämpft dem Anschluß 2 zugeführt. In Fig. 1 sind zur Verdeutlichung die Ausbreitungsrichtungen des Auf- und Abwärtssignals AUF,AB durch Pfeile angedeutet.

In Fig. 2 ist ein Blockschaltbild der in Fig. 1 gezeigten Einrichtung 1 zum richtungsabhängigen Dämpfen von Signalen gezeigt. In einem ersten Zweig, der an einem Ende mit dem Anschluß 2 und an einem zweiten Ende mit dem Anschluß 3 verbunden ist, sind frequenzselektive Elemente, vorzugsweise zwei Tiefpaßfilter 4, 6, die Teil einer Frequenzweiche sind, und ein einstellbares Dämpfungsglied 5 in Serienschaltung vorhanden. Anstatt der beiden Tiefpaßfilter 4, 6 ist es möglich, nur ein einziges Tiefpaßfilter in den ersten Zweig einzufügen. In einem zweiten Zweig, der dem ersten Zweig parallel geschaltet ist und deshalb ebenfalls mit den beiden Anschlüssen 2, 3 verbunden ist, ist ein Hochpaßfilter 7 vorhanden, der Teil einer Frequenzweiche ist.

In dem bereits erwähnten Übertragungssystem (Fig. 3) belegen das Aufwärtssignal AUF und das Abwärtssignal AB üblicherweise unterschiedliche Frequenzbereiche: Das Abwärtssignal AB (Fernseh- und Rundfunksignale) hat Frequenzen im Bereich zwischen 40 - 300 MHz (450 MHz, Hyperband) und das Aufwärtssignal AUF hat Frequenzen im Bereich zwischen 5 - 30 MHz. Das Hochpaßfilter 7 ist so ausgelegt, daß der Frequenzbereich des Abwärtssignals AB nahezu ungedämpft durchgelassen wird; der Frequenzbereich des Aufwärtssignals AUF wird dagegen gesperrt. Die Tiefpaßfilter 4, 6 sind so ausgelegt, daß der Frequenzbereich des Aufwärtssignals AUF durchgelassen wird und der Frequenzbereich des Abwärtssignals AB gesperrt wird. Entsprechend den Anforderungen an die Filter 4, 5, 7 hinsichtlich der Filtercharakteristiken (z. B. Grenzfrequenzen und Filtersteilheiten), sind Filter entsprechender Ordnung zu wählen. Die Wahl und die Ausführung entsprechender Filter sind einem Fachmann bekannt.

Die Einrichtung 1 zum richtungsabhängigen Dämpfen von Signalen kann umfangreich verwendet werden, z. B. überall dort, wo eine richtungsabhängige Dämpfung von Signalen notwendig ist. Dies kann z. B. innerhalb von Schaltungsanordnungen oder von Übertragungssystemen der Fall sein. Die Stelle, an der die Einrichtung 1 zum richtungsabhängigen Dämpfen von Signalen eingefügt wird, kann von Fall zu Fall verschieden sein.

In Fig. 3 ist schematisch ein übertragungssystem gezeigt, bei dem die Einrichtung 1 zum Dämpfen von Signalen einen Abschluß eines öffentlichen Netzes 9 bildet, d. h. die Einrichtung 1 zum Dämpfen von Signalen stellt eine in einem Haus 10 vorhandene Übergabeeinrichtung (auch als "Hausübergabepunkt" bezeichnet) dar, an die ein privates hausinternes Netz 13 angeschlossen ist. Die Einrichtung 1 zum Dämpfen von Signalen wird deshalb im folgenden für die Beschreibung des Übertragungssystems als Übergabeeinrichtung bezeichnet, für die das gleiche Bezugszeichen verwendet wird. An das private hausinterne Netz 13 können Teilnehmerendgeräte 11 (z. B. Fernseh- und Rundfunkgeräte in Verbindung mit Einrichtungen für interaktive Dienste) angeschlossen werden, die die Möglichkeit zum Senden von Aufwärtssignalen besitzen.

Mit dem öffentlichen Netz 9, das z. B. ein für interaktive Dienste ausgelegtes Breitbandverteilnetz ist, ist eine Zentrale 8 verbunden. In Fig. 3 ist nur ein Haus 10 mit einer Übergabeeinrichtung 1 eingezeichnet, es ist jedoch selbstverständlich, daß eine Vielzahl von Übergabeeinrichtungen 1 mit dem öffentlichen Netz 9 verbunden sind.

Die Teilnehmerendgeräte 11 können Aufwärtswärtssignale AUF zur Zentrale 8 senden. Da ein Aufwärtssignal AUF durch eine Übergabeeinrichtung 1 mit einem festgelegten Dämpfungsfaktor, z. B. 20 dB, gedämpft wird, wird der Signalpegel des Aufwärtssignals AUF im privaten hausinternen Netz 13 um einen individuell einstellbaren Wert erhöht. Dies erfolgt dadurch, daß jedes Teilnehmerendgerät 11 Aufwärtssignale AUF mit einem um einen bestimmten Betrag erhöhten Signalpegel aussendet. Dieser Betrag kann für jedes Haus 10 individuell festgelegt werden, je nach dem wie groß die Störungen sind. Im öffentlichen Netz 9 haben die Aufwärtssignale nach der Dämpfung wieder einen für das öffentliche Netz 9 festgelegten Signalpegel oder liegen innerhalb eines dafür vorgesehenen Bereichs, d. h. die Aufwärtssignale AUF haben nur dort einen höheren Signalpegel, wo die eingangs genannten Störungen auftreten können, nämlich im privaten hausinternen Netz 13. Im öffentlichen Netz 9 ist keine Erhöhung der Signalpegel notwendig, da dieses aufwendiger verlegt und besser gewartet ist, als das private hausinterne Netz 13. In Fig. 3 ist zur Darstellung dessen, daß die Störungen im Haus 10 auftreten eine mit dem privaten hausinternen Netz 13 verbundene Störquelle 12 eingezeichnet. Die Störquelle 12 ist hier als eine an einem Ort lokalisierte Quelle dargestellt, die idealisiert die Summe aller Störungen liefert.

Durch die Erhöhung des Signalpegels des Aufwärtssignals AUF wird bei unverändertem Pegel der auftretenden Störungen das Signal-Rauschleistungsverhältnis verbessert. Die Übergabeeinrichtung 1 sorgt erfindungsgemäß dafür, daß Störungen, die im privaten hausinternen Netz 13 einem Aufwärtssignal AUF überlagert werden, gedämpft werden, so daß eine gesicherte Auswertung des Aufwärtssignals AUF in der Zentrale 8 gewährleistet ist. Durch die Übergabeeinrichtung 1 wird dagegen nicht verhindert, daß sich die Störungen einem Aufwärtssignal AUF überlagern.

In Fig. 4 ist der im vorhergehenden beschriebene Sachverhalt in drei Diagrammen dargestellt, die mittlere Stör- und Signalpegel als (ideal: konstante) Funktion der Zeit t zeigen. An der Ordinate ist der Pegel P in normierten Einheiten von 0 bis 4 aufgetragen. Für die Beschreibung der Diagramme A, B, C hat der Signalpegel das Bezugszeichen SP und der Störpegel das Bezugszeichen NP, jeweils mit einem Index zum Verweis auf das entsprechende Diagramm. Im Diagramm A hat der Störpegel NP_{A} den Pegel 1 und der Signalpegel SP_{A} den Pegel 2, es besteht somit ein Signal-Rauschleistungsverhältnis CNR_{A} = 2. Die im Diagramm A gezeigten Pegel entsprechen einer Situation, wie sie ohne Anwendung der Erfindung vorliegt.

Im Diagramm B ist erfindungsgemäß der Signalpegel SP_{A} um einen Faktor 2 auf einen Pegel 4 erhöht worden, der Störpegel NP_{B} ist unverändert. Hier besteht somit ein Signal-Rauschleistungsverhältnis CNR_{B} = 4, d. h. CNR_{A} < CNR_{B}. In Fig. 3 ist im privaten hausinternen Netz 13 vor der Übergabeeinrichtung ein "B" eingezeichnet, um anzudeuten, daß an dieser Stelle das Aufwärtssignal AUF das in Diagramm C (Fig. 4) dargestellte Signal-Rauschleistungsverhältnis CNR_{B} hat.

Das Diagramm C ergibt sich nach einer Dämpfung der in Diagramm B gezeigten Pegel durch die Übergabeeinrichtung 1 (Fig. 3): Der Signalpegel SP_{C} hat wieder den Pegel 2 und der Störpegel NP_{C} den Pegel 0,5: Das Signal-Rauschleistungsverhältnis CNR_{C} = 2 ist im Vergleich zum Diagramm B unverändert, d. h. CNR_{B} = CNR_{C} = 2. In Fig. 3 ist im öffentlichen Netz 9 vor der Übergabeeinrichtung 1 ein "C" eingezeichnet, um anzudeuten, daß an dieser Stelle das Aufwärtssignal AUF das in Diagramm C (Fig. 4) dargestellte Signal-Rauschleistungsverhältnis CNR_{C} hat.

Sowohl für die Einrichtung 1 zum richtungsabhängigen Dämpfen von Signalen (Fig. 1 und Fig. 2) als auch für die Übergabeeinrichtung 1 (Fig. 3) gilt, daß beide an die lokalen Gegebenheiten angepaßt werden können, d. h. die verwendeten Filter können als steckbare Baugruppen ausgeführt sein, so daß durch einfaches Austauschen der Baugruppen andere Frequenzbereiche durchgelassen und gesperrt werden können. Dies kann z. B. dann erforderlich werden, wenn sich die Frequenzaufteilung der Auf- und Abwärtssignale aufgrund von Frequenzplanänderungen oder aufgrund von Modernisierungen des öffentlichen Netzes 9 ändert. Auf die Einstellbarkeit des in Fig. 2 gezeigten Dämpfungsglieds 5 auf einen beliebigen Dämpfungsfaktor wurde bereits hingewiesen. Auch dieses Dämpfungsglied 5 kann als steckbare Baugruppe ausgeführt sein.

Alternativ zu den steckbaren Baugruppen ist es auch möglich, daß zu jedem Hochpaßfilter 7, Tiefpaßfilter 4, 6 und Dämpfungsglied 5 mindestens ein entsprechendes weiteres Element mit unterschiedlichen Eigenschaften vorhanden ist. Mit Hilfe eines Schalters können damit auf einfache Weise andere Filtercharakteristiken und Dämpfungsfaktoren festgelegt werden.

Durch die Dämpfung des Dämpfungsglieds 5 (Fig. 2) kann gegebenenfalls eine Anpassung dieser Dämpfung an im öffentlichen Netz und im privaten hausinternen Netz vorkommende Dämpfungen und Verstärkungen erfolgen. Dies ermöglicht eine bessere und störsichere Übertragung von Signalen im Mehrfachzugriff, unter Verwendung von Modulationsarten, die nicht speziell für vorkommende Störungen optimiert sind.

## Patentansprüche

1. Übertragungssystem, bei dem eine Zentrale (8) an ein Verteilnetz (9) angeschlossen ist, das eine Vielzahl von Übergabeeinrichtungen (1) hat, die jeweils durch einen ersten Anschluß (2) mit dem Verteilnetz (9) verbunden sind, und bei dem an jede Übergabeeinrichtung (1) durch einen zweiten Anschluß (3) Teilnehmerendeinrichtungen (11) angeschlossen werden können, die von der Zentrale (8) ausgesendete Signale (AB) empfangen können und die Aufwärtssignale (AUF) zur Zentrale (8) senden können,
**dadurch gekennzeichnet,** daß jeweils in einer Übergabeeinrichtung (1) erste Mittel (4, 5, 6) vorhanden sind, die ein dem zweiten Anschluß (3) zugeführtes Aufwärtssignal (AUF) mit einem festgelegten Dämpfungsfaktor (a) dämpfen und dem ersten Anschluß (2) zuführen, und daß das dem zweiten Anschluß (3) zugeführte Aufwärtssignal (AUF) einen Signalpegel hat, der so gewählt ist, daß das Aufwärtssignal (AUF) nach der Dämpfung einen im Verteilnetz (9) festgelegten Pegel hat.

2. Übertragungssystem nach Anspruch 1, bei dem das von der Zentrale (8) ausgesendete Signal (AB) Frequenzen hat, die in einem ersten Frequenzbereich liegen, und bei dem das Aufwärtssignal (AUF) Frequenzen hat, die in einem vom ersten Frequenzbereich unterschiedlichen zweiten Frequenzbereich liegen.

3. Übertragungssystem nach Anspruch 1, bei dem die ersten Mittel (4, 5, 6) in einem ersten Zweig vorhanden sind, der an einem Ende mit dem ersten Anschluß (2) und an einem zweiten Ende mit dem zweiten Anschluß (3) verbunden ist, und bei dem zweite Mittel (7) in einem zweiten Zweig vorhanden sind, der parallel zu dem ersten Zweig geschaltet ist und ebenfalls mit den beiden Anschlüssen (2, 3) verbunden ist.

4. Übertragungssystem nach Anspruch 3, bei dem die ersten Mittel (4, 5, 6) mindestens ein Tiefpaßfilter (4, 6) und ein einstellbares Dämpfungsglied (5) enthalten, die das Aufwärtssignal (AUF) durchlassen und dämpfen, und bei dem die zweiten Mittel (7) mindestens ein Hochpaßfilter enthalten, das das von der Zentrale (8) ausgesendete Signal (AB) durchläßt.

5. Ubertragungssystem nach Anspruch 3, bei dem die ersten und zweiten Mittel (4, 5, 6; 7) als steckbare Baugruppen ausgeführt sind, die bei Bedarf austauschbar sind.

6. Übertragungssystem nach Anspruch 4, bei dem den ersten und zweiten Mitteln (4, 5, 6; 7) jeweils mindestens ein weiteres Mittel parallel geschaltet ist, die durch einen Schalter auswählbar sind.

7. Übergabeeinrichtung (1) für ein Übertragungssystem, bei dem eine Zentrale (8) an ein Verteilnetz (9) angeschlossen ist und die Übergabeeinrichtung (1) durch einen ersten Anschluß (2) mit dem Verteilnetz (9) verbunden ist, und bei dem an die Übergabeeinrichtung (1) durch einen zweiten Anschluß (3) Teilnehmerendeinrichtungen (11) angeschlossen werden können, die von der Zentrale (8) ausgesendete Signale (AB) empfangen können und die Aufwärtssignale (AUF) zur Zentrale (8) senden können,
**dadurch gekennzeichnet**, daß die Übergabeeinrichtung (1) erste Mittel (4, 5, 6) hat, die ein dem zweiten Anschluß (3) zugeführtes Aufwärtssignal (AUF) mit einem festgelegten Dämpfungsfaktor (a) dämpfen und dem ersten Anschluß (2) zuführen, und daß das dem zweiten Anschluß (3) zugeführte Aufwärtssignal (AUF) einen Signalpegel hat, der so gewählt ist, daß das Aufwärtssignal (AUF) nach der Dämpfung einen im Verteilnetz (9) festgelegten Pegel hat.

8. Einrichtung zum richtungsabhängigen Dämpfen von Signalen, mit zwei Anschlüssen (2, 3), durch die die Einrichtung (1) zum richtungsabhängigen Dämpfen von Signalen in einen Leitungssabschnitt (L) einfügbar ist, mit ersten Mitteln (4, 5, 6), die ein dem zweiten Anschluß (3) zuführbares Aufwärtssignal (AUF) mit einem festgelegten Dämpfungsfaktor (a) dämpfen und dem ersten Anschluß (2) zuführen, und mit zweiten Mitteln (7), die ein dem ersten Anschluß (2) zuführbares erstes Signal (AB) dem zweiten Anschluß (3) zuführen, so daß die Einrichtung (1) zum Dämpfen von Signalen eine richtungsabhängige Dämpfung hat.
